# EUROPÄISCHE PATENTANMELDUNG

(11) **EP 1 598 393 A1**
(43) Veröffentlichungstag der Anmeldung: **23.11.2005**
(21) Anmeldenummer: 04102229.4
(22) Anmeldetag: 19.05.2004
(51) Int. Cl.: C08K 9/10

(54) **Füllmaterial auf Basis von polymerbeschichteten Teilchen, zum Füllen von Hohlräumen insbesondere von Strukturelementen, Herstellungsverfahren und Strukturelement**

(71) Anmelder: Sika Technology AG, 6340 Baar (CH)
(72) Erfinder: Finter, Jürgen, 8037, Zürich (CH); Blank, Norman, 8803, Rüschlikon (CH)
(74) Vertreter: Isler, Jörg

(57) **Zusammenfassung**

Es wird ein Füllmaterial, insbesondere zum Füllen von Hohlräumen insbesondere von Strukturelementen, und ein Herstellungsverfahren sowie ein Strukturelement vorgeschlagen, wobei das Füllmaterial Teilchen umfasst, die mit einem reaktiven Duroplasten beschichtet sind, wobei der reaktive Duroplast bei Raumtemperatur im unreagierten Zustand nicht fliesst.

## Beschreibung

### Technisches Gebiet

Die Erfindung betrifft ein Füllmaterial, insbesondere zum Füllen von Hohlräumen insbesondere von Strukturelementen, wobei das Füllmaterial Teilchen umfasst, die mit einem reaktiven Duroplasten beschichtet sind. Weiterhin betrifft die Erfindung ein Verfahren zur Herstellung eines Füllmaterials, insbesondere ein erfindungsgemässes Füllmaterial, wobei Teilchen mit einem reaktiven Duroplasten beschichtet werden. Ferner betrifft die Erfindung ein Strukturelement mit einem Hohlraum.

### Stand der Technik

In der Fertigung sowohl von Fahrzeugen als auch von Containern wird gefordert, dass tragende Metallteile zugleich leicht sind und eine hohe Steifigkeit bzw. Festigkeit aufweisen. In vielen Fällen kann dieses Ziel erreicht werden, indem Metallteile beispielsweise in Sandwichbauweise konzipiert werden und die Hohlräume mit einem porösen Material wie zum Beispiel Schaumstoffen ausgefüllt werden. Solche Sandwichs werden hergestellt durch Verkleben eines Schaumkern mit zwei Metalldeckschichten oder durch Ausschäumen mit zum Beispiel einem PUR-Reaktionsharzsystem. Neben solchen Kunststoffschäumen sind auch Metallschäume allgemein bekannt, wobei diese den Vorteil aufweisen, eine höhere Energieaufnahme bei Verformung zu haben.

Weiterhin ist allgemein bekannt, ein verstärkendes Füllmaterial für einen Hohlraum dadurch zu erhalten, dass der Hohlraum durch Schüttung mit Hohlkugeln gefüllt wird, verschlossen wird und anschliessend mit einem niederviskosen Klebstoff gefüllt wird, wobei der Klebstoff die Zwischenräume ausfüllt und anschliessend härtet. Nachteilig hierbei ist insbesondere, dass ein solcher Hohlraum dicht verschlossen werden muss, um ein Auslaufen des Klebers zu verhindern.

Ferner ist allgemein bekannt, dass Füllstoffteilchen in einer Wirbelschicht mit einem Epoxidharzsystem durch Sprühen beschichtet werden. Nachteilig hierbei ist, dass das Epoxidharzsystem so niederviskos sein muss, dass es durch Sprühen applizierbar ist. Gleichzeitig muss das Epoxidharzsystem jedoch eine so hohe Reaktivität aufweisen, dass es unter Bedingungen der Wirbelschicht in der Hitze auf der Kugeloberfläche rasch polymerisiert. Ist es daher in diesem Fall gewünscht, dass nach der Verwirbelung auf der Kugeloberfläche ein teilvernetzter Überzug vorliegt, der darüber hinaus gut haftet und mechanisch belastbar ist, wird es immer aufwändiger, das der Überzug bei erhöhter Temperatur noch genügend sinterbar und reaktionsfähig ist.

### Darstellung der Erfindung

Aufgabe der vorliegenden Erfindung ist, ein Füllmaterial, ein Verfahren zur Herstellung eines Füllmaterials und ein Strukturelement bereitzustellen, die die Nachteile des Standes der Technik vermeiden.

Die Aufgabe wird gelöst durch ein Füllmaterial, insbesondere zum Füllen von Hohlräumen insbesondere von Strukturelementen, wobei das Füllmaterial Teilchen umfasst, die mit einem reaktiven Duroplasten beschichtet sind, wobei der reaktive Duroplast bei Raumtemperatur im unreagierten Zustand nicht fliesst. Die Aufgabe wird weiterhin durch ein Verfahren zur Herstellung eines, insbesondere erfindungsgemässen, Füllmaterials gelöst, wobei Teilchen mit einem reaktiven Duroplasten beschichtet werden. Erfindungsgemäss ist es daher einerseits möglich, dass das Füllmaterial ohne aufwändige konstruktive Massnahmen derart in Hohlräume von Strukturelementen eingebracht werden kann, dass ein Auslaufen von Füllmaterial verhindert wird, und andererseits, dass das Duroplastsystem - beispielsweise ein Epoxidharzsystem - nicht einerseits niederviskos und gleichzeitig vergleichsweise hoch reaktiv sein muss.

Weitere vorteilhafte Ausgestaltungen der Erfindung ergeben sich aus den Unteransprüchen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

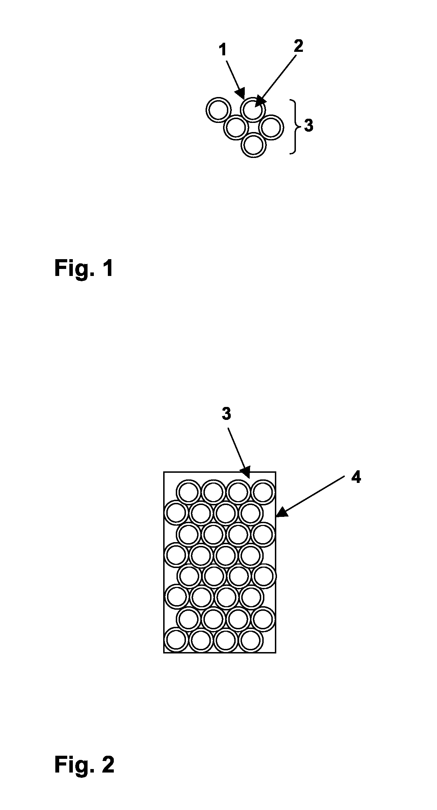

In **Figur 1** ist eine Mehrzahl von Füllmaterialteilchen des erfindungsgemässen Füllmaterials 3 dargestellt, wobei die Füllmaterialteilchen aus Teilchen 2 - insbesondere Hohlkörperteilchen - gebildet sind, die mit einem Duroplasten 1 im wesentlichen vollständig umgeben sind.

In **Figur 2** ist ein Strukturelement 4 dargestellt, das einen Hohlraum aufweist, der mit dem Füllmaterial 3 gefüllt ist.

Es sind nur die für das unmittelbare Verständnis der Erfindung wesentlichen Elemente gezeigt.

### Weg zur Ausführung der Erfindung

Die vorliegende Erfindung betrifft Zusammensetzungen für Duroplaste 1 bzw. Duroplastmaterialien 1, insbesondere aus Epoxidharzformulierungen, mit einem latenten Härter- insbesondere einem thermischen Härter-, die vorzugsweise mit zum Beispiel reaktiven flüssigen Elastomeren schlagzäh modifizierte Epoxidharzsysteme bilden, die bei Raumtemperatur im unreagierten Zustand nicht fliessen, d.h. die bei Raumtemperatur eine genügend hohe Viskosität von typischerweise über 1000 Pas, bevorzugt über 2000 Pas und besonders bevorzugt über 3000 Pas aufweisen. Solche Formulierungen werden bei erhöhter Temperatur oder bei Zimmertemperatur vorzugsweise mit einem Zentrifugalmischer auf die Hohlkugeln, d.h. auf die Teilchen 2, aufgebracht. Überraschenderweise wird hierbei erfindungsgemäss eine homogene bzw. gleichmässige Beschichtung der Teilchen bzw. der Kugeln mit dem Duroplasten 1 erzielt. Je nach Viskosität können die beschichteten Kugeln eine gewisse Klebrigkeit aufweisen. Werden nicht klebrige Beschichtungen gewünscht, so können die Beschichtungen mit einem trockenen Pulver bestäubt werden oder durch Zugabe eines zweiten, nicht latenten Härters unmittelbar vor der Beschichtung teilweise vernetzt werden.

Bevorzugt ist vorgesehen, dass die Teilchen hohl sind, bevorzugt als Hohlkugeln ausgebildet sind und besonders bevorzugt im wesentlichen gleichmässig beschichtet sind. Dadurch, dass die Teilchen in ihrem Inneren hohl sind, ist es möglich, das Füllmaterial besonders leicht zu machen. Hierdurch ist es möglich, Strukturelementen zum einen eine grosse Stabilität zu verleihen, ohne dass dies jedoch mit einer übermässigen Gewichtszunahme verbunden ist. Wenn die Teilchen als Kugeln - insbesondere als Hohlkugeln - ausgebildet sind, ist deren mit dem Duroplastmaterial zu beschichtende Oberfläche vergleichsweise gering und auch deren Stabilität gegen einwirkende Kräfte vergleichsweise gross.

Weiterhin ist vorgesehen, dass der Duroplast bei Raumtemperatur im wesentlichen unbegrenzt lagerstabil ist und insbesondere schlagzäh modifiziert ist. Hierdurch ist es möglich, das Duroplastmaterial lange zu lagern und eine logistisch vergleichsweise wenig aufwändige und damit kostengünstige Herstellung des Füllmaterials zu gewährleisten. Hierdurch ist es erfindungsgemäss nicht oder nur zu einem sehr geringen Grade notwendig, dass während der Beschichtung der Teilchen mit dem Duroplasten eine merkliche Vernetzung stattfindet. Der Hauptteil der Vernetzung des Duroplasten kann dann im Rahmen der vollständigen Aushärtung in einem Hohlraum eines Strukturelementes erfolgen, in den die zu beschichteten Teilchen eingefüllt wurden. Diese Aushärtung erfolgt z.B. in der Automobilindustrie so, dass die beschichteten Teilchen entweder vor der KTL (Katodische Tauch-Lakierung) in den Hohlraum eingebracht und im Rohbauofen gehärtet, oder nach der KTL in den Hohlraum eingebracht und im Lackofen gehärtet werden.
Hierdurch ist es weiterhin vorteilhaft möglich, dem Material des Duroplasten und damit dem "gefüllten" Strukturelement eine grössere Stabilität zu verleihen.

Als Duroplastsysteme sind besonders schlagzäh modifizierte einkomponentige Epoxidharzsysteme geeignet, die bei Raumtemperatur im unvernetzten Zustand lagerstabil sind und bei Raumtemperatur eine genügend hohe Viskosität von typischerweise über 1000 Pas, bevorzugt über 2000 Pas und besonders bevorzugt über 3000 Pas aufweisen. Sie bestehen typisch aus Mischungen von sog. Festharzen oder Addukten (d.h. mit Diphenolen oder Dicarbonsäuren zu bei Raumtemperatur festen Diglycidylethern vorverlängerten Diglycidylethern von Diphenolen) mit flüssigen Diglycidylethern, Zähigkeitsverbesseren wie Thermoplasten z. B. Poly-p-phenylenoxid, Polyalkylenoxidglycidylether oder reaktiven Flüssigkautschuken und Füllstoffen. Typische Molekulargewichte der Festharze oder Addukte liegen im Bereich 800 - 10'000 Dalton, bevorzugt 900 - 8000 Dalton. Als Härter werden vorzugsweise latente Härtern wie Dicyandiamid oder andere substituierte Harnstoffe eingesetzt, die bei Temperaturen ab 160 °C die Vernetzungsreaktion ermöglichen. Es ist auch möglich, zusätzlich zu latenten Härtern übliche Epoxidhärter wie Polyphenole, Mercaptane, Amine oder Carbonsäuren, bzw. Carbonsäureanhydride, unmittelbar vor der Beschichtung zu dem Klebersystem zu geben und eine teilweise Vernetzung des Überzugs zu erreichen. Ausserdem ist möglich, unmittelbar vor dem Beschichtungsvorgang dem Klebersystem zusätzlich Diisocyanate zuzugeben und so eine Vorvernetzung über die β-Hydroxygruppen der Epoxidaddukte zu erreichen. Die zusätzliche Vorvernetzung führt zu höheren Molekulargewichten, damit zu einer Erhöhung der Glastemperatur und einer Verminderung der Klebrigkeit. Derartige Systeme sind klebfrei, wenn die Glastemperatur der unvernetzten und vorvernetzten Kleberschicht grösser als 30 °C ist.

Die Beschichtung wird vorzugsweise möglichst dünn gewählt, insbesondere bei Leichtbauanwendungen. Der Gewichtsanteil des Klebstoffes im Verhältnis zur Kugel liegt bei 5 bis 80%, bevorzugt bei 20 bis 50% und insbesondere bei 30%. Die Dicke der Beschichtung liegt bei 2 bis 200 µm, bevorzugt bei 5 bis 100 µm, besonders bevorzugt bei 10 bis 80 µm und insbesondere bei 50 µm.

Ferner ist vorgesehen, dass die beschichteten Teilchen Füllmaterialteilchen bilden, die eine klebrige oder eine trockene Oberfläche aufweisen. Die beschichteten Kugeln bzw. die beschichteten Teilchen können je nach Viskosität des Duroplasten eine gewisse Klebrigkeit aufweisen, was insbesondere für das Füllen von Hohlräumen von Strukturelementen aufgrund der dann möglichen Haftung an der Innenwandung vorteilhaft sein kann. Es ist jedoch erfindungsgemäss für andere Anwendungen durchaus ebenfalls vorteilhaft, dass die beschichteten Teilchen nicht klebrig sind. Ist dies der Fall, ist es erfindungsgemäss möglich, das die Beschichtung mit einem trockenen Pulver bestäubt wird. Das trockene Pulver kann erfindungsgemäss angewendet werden, um die Klebrigkeit bzw. Haftung der Beschichtung einzustellen.

Weiterhin ist vorgesehen, dass die Füllmaterialteilchen mit einem Pulver bestäubt sind, wobei das Pulver insbesondere Thermoplastpulver und/oder ein latenter Härter des Duroplasten und/oder ein inerter Füllstoff ist. Die Verwendung eines Thermoplastpulver hat den Vorteil, dass es einen Beitrag zur Zähigkeit leisten kann. Dies ist bei der Verwendung von Poly(vinylbutyral)pulver und/oder von Polyamidpulver möglich. Neben Thermoplastpulvern sind auch pulverförmige Mineralien oder Füllstoffe wie beispielsweise Calciumcarbonate, Wollastonite, Quarzmehle oder pyrogene Kieselsäure möglich. Das Pulver kann ausschliesslich oder kombiniert mit anderen Stoffen auch einen - insbesondere mikronisierten, festen und latenten - Härter, wie beispielsweise Dicyadiamid, aufweisen. Vorzugsweise ist es bei dieser Ausführungsform vorgesehen, einen Teil des Härters der Formulierung des Duroplasten beizugeben, während der Rest des Härters in Form eines Pulvers aufgestäubt wird. Ferner ist es erfindungsgemäss ausschliesslich oder kombiniert mit einem oder mehreren anderen Stoffen möglich, dass als zur Bestäubung vorgesehenes Pulver ein organischer oder mineralischer Füllstoff verwendet wird.

Bevorzugt wird die Beschichtung der Teilchen mit dem Duroplasten erfindungsgemäss in einem Zentrifugalmischer vorgenommen. Bei einem solchen Zentrifugalmischer bewirkt die Drehung eines Armes mit hoher Geschwindigkeit in eine erste Richtung kombiniert mit der Drehung eines an dem Arm befestigten Korbs in die Gegenrichtung (daher die Bezeichnung "Duale Asymmetrische Zentrifuge"), dass eine sehr starke und äusserst schnelle Durchmischung der in der Maschine befindlichen Materialien stattfindet, auch wenn die Viskosität beispielsweise des duroplastischen Materials vergleichsweise gross ist, insbesondere über einen Wert hinausgeht, bei dem ein Sprühen des Materials möglich wäre. Die Viskosität kann über die Temperatur eingestellt werden, vorteilhafterweise wird das Klebstoffsystem soweit erwärmt, bis die Viskosität 20 - 50 Pas beträgt.

Im folgenden werden vier Ausführungsbeispiele näher erläutert:

### Beispiel 1: Beschichtete Kugeln, klebrige Oberflächen, Harzsystem (SikaPower® 496/3).

Jeweils wurden Hohlkugeln aus Stahl mit Durchmesser 3,2 mm und der Schüttdichte 0,36 g/ml verwendet. Als Beschichtung wurde ein kommerzieller Strukturkleber SikaPower® 496/3 als Duroplast 1 für die Beschichtung eingesetzt. Unter Annahme einer homogenen Beschichtung der Kugeln werden für verschiedene Klebstoffmengen folgende Schichtdicken auf den Kugeln erwartet:

| **Gewichtsprozent Klebstoff** | **Berechnete Schichtdicke der Beschichtung/Klebstoffschicht in µm** |
|---|---|
| 10 | 12 |
| 20 | 30 |
| 30 | 50 |

Kugeln und Klebstoff (Gesamtmenge 70 g) wurden in einem Becher eingewogen und auf 80°C erhitzt. Die Beschichtung erfolgte in einem Speedmixer DAC 150 FV (Zentrifugalmischer des Herstellers Hauschild). Man erhält homogen beschichtete leicht klebrige Kugeln, die sich gut fördern lassen. Die leicht klebrigen Kugeln wurden in eine mit Trennmittel behandelte zylindrische Form als Beispiel für einen Hohlraum eines Strukturelements gegeben und bei 180°C 30 min ausgehärtet. Man erhält einen steifen Zylinder.

Einzelne ausgehärtete Kugeln wurden zerschnitten, die Schichtdicken wurden bei 200-facher Vergrösserung ausgemessen. Die Beschichtung erwies sich als homogen und entsprach der berechneten Schichtdicke.

### Beispiel 2: Beschichtete Kugeln, trockene Oberflächen, Zähmodifiziertes Epoxidharz-System, bestäubt mit Butvar.

Duroplast bzw. Klebstoff und Verarbeitungsweise wie in Beispiel 1. Das Beispiel mit 30 Gew.-% Klebstoff (70 g Gesamtgewicht) wurde wiederholt. Unmittelbar nach der Beschichtung wurden die Kugeln mit 5 g Polyvinylbutyral Movital 60HH bestäubt. Man erhält rieselfähige Kugeln. In eine Zylinderform eingebracht, wird nach Aushärtung bei 180°C für 30 min ein steifer Zylinder erhalten.

### Beispiel 3: Beschichtete Kugeln, Zähmodifiziertes Epoxidharz-System

Ein reaktiver zähmodifizierter Epoxidklebstoff wurde hergestellt durch Mischen von 100g eines Adukts aus Bisphenol-A-diglycidylether mit dimerer Fettsäure (Epoxidwert 2,8 Epoxidäquivalente/kg) mit 100g festem Epoxidharz (GT 7004, Hersteller Vantico AG, Epoxidwert 1,4 Epoxidäquivalente/kg) und 50g flüssiges Epoxidharz (GY 250, Hersteller Vantico) bei 90°C in einem Planetenmischer.

Zu der homogenen Mischung werden 125g eines reaktiven Polyols (Polyol mit Epoxidendgruppen), 130g Leichtfüllstoff (Extendospheres, zur Herabsetzung der Dicht des Duroplasten) und 6,5g pyrogene Kieselsäure (Cabosil TS 720, Hersteller Cabot) sowie 12,2g Dicyandiamid gegeben.

Das reaktive Polyol mit Epoxidendgruppen wurde wie folgt hergestellt: 200g PolyTHF 2000 (PTMEG, Polytetramethylene ether glycol, 2000 g/mol Molekulargewicht), OH-Zahl 57,5 mg/g KOH) wurden 30 Minuten unter Vakuum bei 100°C getrocknet. Anschliessend wurden 47,5g IPDI (isophorone diisocyanate) und 0,04g Dibutylzinndilaurat zugegeben. Die Reaktion wurde unter Vakuum bei 90°C bis zur Konstanz des NCO-Gehaltes bei 3,6% nach 2,5 Stunden geführt (theoretischer NCO-Gehalt: 3,7 %). Anschliessend wurden 123,7 g des Trimethylolpropanglycidylethers (enthält etwa 50% als monohydroxylhaltiges Epoxid) zugegeben. Es wurde bei 90°C unter Vakuum weitergerührt bis der NCO-Gehalt nach weiteren 3 Stunden unter 0,1% gesunken war.

Mit dem Klebstoff werden T-Peel und Zugscherprüfkörper hergestellt und bei 180°C für 30 min ausgehärtet. Man erhält folgende mechanische Werte:

| | |
|---|---|
| Zugfestigkeit (MPa) | 22,4 |
| Elongation (%) | 4,75 |
| E-Modul (MPa) | 1396 |
| T-Peel (N/mm) | 5,05 |

Nach der Hinzufügung des solchermassen hergestellten Duroplasten zu den Teilchen werden Kugeln (Füllstoffteilchen) erhalten, die in unausgehärtetem Zustand eine schwach klebrige Oberfläche aufweisen. Hierzu werden die Hohlkörper bzw. die Teilchen, insbesondere Stahl-Hohlkugeln, wie bei Beispiel 1 und 2 beschrieben, mit dem Duroplasten im Zentrifugalmischer gemischt und damit beschichtet.

### Beispiel 4: Beschichtete Kugeln, trockene Oberflächen, Zähmodifiziertes Epoxidharz-System, bestäubt mit inertem Füller.

Der Duroplast bzw. der Klebstoff in Beispiel 3 wurde mit 6,1 g Dicyandiamid hergestellt. 49 g Stahlkugeln bzw. Stahlhohlkugeln und 21 g Klebstoff wurden im Speedmixer zu beschichteten Kugeln umgesetzt, dann wurden die Kugeln, d.h. die Füllmaterialteilchen, mit 250 mg Dicyandiamid in 1 g pyrogener Kieselsäure bestäubt. Man erhält trockene beschichtete Kugeln.

### Bezugszeichenliste

- 1: Duroplast
- 2: Teilchen
- 3: Füllmaterial
- 4: Strukturelement

## Patentansprüche

1. Füllmaterial (3), insbesondere zum Füllen von Hohlräumen insbesondere von Strukturelementen, wobei das Füllmaterial (3) Teilchen (2) umfasst, die zumindest zum Teil mit einem reaktiven Duroplasten (1) beschichtet sind,
**dadurch gekennzeichnet, dass** der reaktive Duroplast (1) bei Raumtemperatur im unreagierten Zustand nicht fliesst.

2. Füllmaterial (3) nach Anspruch 1, **dadurch gekennzeichnet, dass** der reaktive Klebstoff im unreagierten Zustand bei Raumtemperatur eine Viskosität von über 1000 Pas, bevorzugt über 2000 Pas und besonders bevorzugt über 3000 Pas aufweist.

3. Füllmaterial (3) nach Anspruch 1 oder 2, **dadurch gekennzeichnet, dass** die Dicke der Beschichtung der Teilchen (2) bei 2 bis 200 µm, bevorzugt bei 5 bis 100 µm, besonders bevorzugt bei 10 bis 80 µm und insbesondere bei 50 µm liegt.

4. Füllmaterial (3) nach Anspruch 1, 2 oder 3, **dadurch gekennzeichnet, dass** die Teilchen (2) hohl sind, bevorzugt als Hohlkugeln ausgebildet sind.

5. Füllmaterial (3) nach einem der vorhergehenden Ansprüche, **dadurch gekennzeichnet, dass** die Teilchen (2) im wesentlichen gleichmässig beschichtet sind.

6. Füllmaterial (3) nach einem der vorhergehenden Ansprüche, **dadurch gekennzeichnet, dass** der Duroplast (1) ein Epoxidharzsystem ist

7. Füllmaterial (3) nach einem der vorhergehenden Ansprüche, **dadurch gekennzeichnet, dass** der Duroplast (1) bei Raumtemperatur im wesentlichen unbegrenzt lagerstabil ist und insbesondere schlagzäh modifiziert ist.

8. Füllmaterial (3) nach einem der vorhergehenden Ansprüche, **dadurch gekennzeichnet, dass** die beschichteten Teilchen Füllmaterialteilchen bilden, die eine klebrige oder eine trockene Oberfläche aufweisen.

9. Füllmaterial (3) nach einem der vorhergehenden Ansprüche, **dadurch gekennzeichnet, dass** die Glastemperatur des unvernetzten und vorvernetzten Duroplasten grösser als 30 °C ist.

10. Füllmaterial (3) nach einem der vorhergehenden Ansprüche, **dadurch gekennzeichnet, dass** die beschichteten Füllmaterialteilchen mit einem Pulver bestäubt sind, wobei das Pulver insbesondere Thermoplastpulver und/oder ein latenter Härter des Duroplasten und/oder ein inerter Füllstoff ist.

11. Verfahren zur Herstellung eines Füllmaterials (3), insbesondere nach einem der vorhergehenden Ansprüche 1 bis 10, wobei Teilchen (2) mit einem reaktiven Duroplasten (1) beschichtet werden,
**dadurch gekennzeichnet, dass** die Beschichtung der Teilchen (2) mit dem Duroplasten (1) in einem Zentrifugalmischer vorgenommen wird.

12. Verfahren zur Herstellung eines Füllmaterials (3), insbesondere nach einem der vorhergehenden Ansprüche 1 bis 10, wobei Teilchen (2) mit einem reaktiven Duroplasten (1) beschichtet werden,
**dadurch gekennzeichnet, dass** die Temperatur des reaktiven Duroplasten (1) während dem Mischprozess so erhöht wird, dass die Viskosität des Duroplasten 20 - 50 Pas beträgt.

13. Strukturelement (4) mit einem Hohlraum, wobei der Hohlraum wenigstens teilweise mit einem Füllmaterial (3) nach einem der Ansprüche 1 bis 10 gefüllt ist, wobei das Füllmaterial (3) insbesondere ausgehärtet ist.
